# EUROPEAN PATENT APPLICATION

(11) **EP 3 173 223 A1**
(43) Date of publication of application: **31.05.2017**
(21) Application number: 15196797.3
(22) Date of filing: 27.11.2015
(51) Int. Cl.: B29D 99/00, B29C 65/48, B29C 65/00

(54) **A METHOD FOR MANUFACTURING AN AIRCRAFT STRUCTURE COMPONENT**

(71) Applicant: Airbus Operations GmbH, 21129 Hamburg (DE)
(72) Inventor: Barlag, Carsten, 21129 Hamburg (DE)
(74) Representative: Bird & Bird LLP

(57) **Abstract**

A method for manufacturing an aircraft structure component (1') of fiber composite material, wherein a semifinished first part (3) made of a dry fiber preform is provided, a semifinished second part (5) made of either a dry fiber preform or a hardened fiber matrix composite is provided, a semifinished aircraft structure component (1) is prepared by placing the semifinished first part (3) against the semifinished second part (5), such that a first connection surface (13) rests against a second connection surface (15), matrix material (33) is infused through the semifinished aircraft structure component (1), and the semifinished aircraft structure component (1) is cured. The object, to provide a method wherein the connection between the first part (3') and the second part (5') is improved, while at the same time the weight of the aircraft structure component (1') is not increased considerably, is achieved in that before infusing matrix material (33) through the semifinished aircraft structure component (1), an intermediate layer (21) for assisting adhesion is applied between the first connection surface (13) and the second connection surface (15).

## Description

The present invention relates to a method, in particular an infusion method, for manufacturing an aircraft structure component of fiber composite material having a first part and a second part connected to the first part. The aircraft structure component might be e.g. a fuselage shell or a wing cover shell, wherein the first part might be a skin element and the second part might be a support element, such as a stringer, connected to the skin element for supporting the skin element. The method comprises the following steps.

A semifinished first part made of a dry fiber preform is provided. The semifinished first part has a first connection surface. Further, a semifinished second part made of either a dry fiber preform or a hardened fiber matrix composite is provided. The semifinished second part has a second connection surface for being connected to the first connection surface of the semifinished first part. The dry fiber preforms of the semifinished first and second parts preferably relate to fibers which are not preimpregnated with matrix material. The hardened fiber matrix composite of the semifinished second part preferably relates to a fiber matrix composite which is at least partially hardened or semihardened, i.e. it can but does not have to be readily hardened as in the finished aircraft structure component.

Subsequently, a semifinished aircraft structure component is prepared by placing the semifinished first part against the semifinished second part, such that the first connection surface rests against the second connection surface. I.e., the semifinished aircraft structure component comprises the semifinished first part and the semifinished second part resting against one another at their connection surfaces.

As a next step, matrix material, in particular infusion resin, is infused through the semifinished aircraft structure component, in particular through and between the semifinished first part and the semifinished second part, so that the dry fiber preforms and the interface between the semifinished first part and the semifinished second part are soaked or filled with matrix material. The infusion of matrix material is preferably effected by a vacuum applied to a sealed environment to which the semifinished aircraft structure component is exposed. The sealed environment is created either in a cavity enclosed by a closed tool, preferably between two or more tool parts, or in a vacuum bag preferably in combination with a tool opened to one side. An inlet for supplying matrix material is included in the tool or in the vacuum bag, so that the vacuum draws the matrix material supplied through the inlet through the environment in the cavity or in the vacuum bag and, thus, through the semifinished aircraft structure component.

However, instead of or in addition to drawing the matrix material through the sealed environment by a vacuum, the matrix material may also be injected into the environment under pressure. Thus, the expression "infusion of matrix material" within the meaning of the present invention also includes injection of matrix material. Also, other ways of infusing the matrix material are included by the expression "infusion of matrix material" within the meaning of the present invention, such as film infusion, where a film of matrix material is placed on or next to the dry fiber preform, which is melted subsequently, so that the liquid or viscous matrix material flows through the preform.

Subsequently, the semifinished aircraft structure component is cured, preferably by applying a certain temperature, e.g. in an oven, or by applying a certain temperature and a certain pressure, e.g. in an autoclave or in a heated tool. In such a way, a finished aircraft structure component is obtained having a first part and a second part both hardened and fixedly connected to one another. It is also possible that before infusing matrix material the semifinished aircraft structure component is preheated to a certain temperature and over a certain time.

Such methods, commonly known as Resin Transfer Molding (RTM) or Resin Infusion (RI) methods, are known in the art and commonly applied for manufacturing aircraft structure components of fiber composite material. A connection between the semifinished first part and the semifinished second part is established by the matrix material which is infused through and between the semifinished first part and the semifinished second part, and subsequently hardended.

However, for some specific aircraft structure components a particularly strong connection between the first part and the second part is required, so that it is desirable to even strengthen the connection between the first and second parts. This is the case for example when a support element is to be connected to a skin element, where a particular strong connection at a possibly low structural weight is desired. Such aircraft structure components could be, e.g., fuselage shells or wing cover shells. The simplest way to strengthen the connection between the support element and the skin element would be to increase the flange portion of the support element and thus to increase the connection surfaces between the support element and the skin element. However, in order to optimize the aircraft structure component for a minimum weight the flange portion of the support element should be as short as possible.

Therefore, the object of the present invention is to provide a method for manufacturing an aircraft structure component of fiber composite material having a first part and a second part connected to the first part, wherein the connection between the first part and the second part is improved, while at the same time the weight of the aircraft structure component is not increased considerably.

This object is achieved in that before infusing matrix material through the semifinished aircraft structure component, an intermediate layer for assisting adhesion between the first part and the second part in the cured aircraft structure component is applied between the first connection surface of the semifinished first part and the second connection surface of the semifinished second part. The intermediate layer can have different forms and compositions and might be distributed over the entire first and second connection surfaces, or might be provided only at specific locations. In any case, the intermediate layer affects the matrix material and/or the fiber structure of the first and/or second part such that adhesion between the first and second connection surfaces is improved. In such a way, the first and second connection surfaces might be formed smaller without weakening the connection between the first part and the second part, so that considerable weight of the aircraft structure component can be saved.

According to a preferred embodiment the intermediate layer is formed as an adhesive film. Such an adhesive film can be, for example, a FM 300 film of Cytec Industries. Such an adhesive film can considerably strengthen the connection between the first part and the second part. There are various ways to apply the adhesive film.

In particular, it is preferred that the adhesive film is applied between the first connection surface and the second connection surface by placing the adhesive film integrally onto the first connection surface and/or the second connection surface. This means an integral, solid adhesive film is present which can be, e.g., unwound from a roll of adhesive film and placed between the first and second connection surfaces, e.g. by hand. This is a particular simple way of applying the adhesive film.

Alternatively, it is preferred that the adhesive film is applied between the first connection surface and the second connection surface by spraying an adhesive aerosol onto the first connection surface and/or the second connection surface. This is a particular simple way of applying the adhesive film.

Alternatively, it is also preferred that the adhesive film is applied between the first connection surface and the second connection surface by distributing a liquid or viscous adhesive resin onto the first connection surface and/or the second connection surface. The adhesive resin is preferably different from the infusion resin, i.e. the infused matrix material, but might also be the same. This is a possibly simple way of applying the adhesive film.

In particular, it is also preferred that the adhesive film is perforated and/or comprises a structured surface for allowing or promoting gas exchange and, thus, improving the adhesion.

According to a preferred embodiment the intermediate layer is formed as a fleece of dry fibers through which matrix material is infused during the infusion step in order to strengthen the connection between the first and second parts. Alternatively, instead of dry fibers the fibers might also be preimpregnated, i.e. prepregs, with a resin, which resin might be different from or the same as the infused matrix material.

According to an alternative embodiment, the intermediate layer is formed as a fabric of dry fibers through which matrix material is infused during the infusion step so as to strengthen the connection between the first and second parts. Alternatively, instead of dry fibers the fibers might also be preimpregnated, i.e. prepregs, with a resin, which resin might be different from or the same as the infused matrix material.

According to a preferred embodiment, one of the semifinished first part and the semifinished second part is formed as a semifinished skin element, and the other of the semifinished first part and the semifinished second part is formed as a semifinished support element. The semifinished support element might be formed as a stringer element or a frame element for supporting the skin element, and might be form through a pultrusion method. Such an aircraft structure component might be a part of the fuselage shell or the wing cover shell.

In particular, it is preferred that the semifinished first part is formed as the semifinished skin element and the semifinished second part is formed as the semifinished support element. In such a way, an aircraft structure component comprising a skin element supported by a support element is manufactured. Such aircraft structure components can be used e.g. as a part of the fuselage or of the wing.

In particular, it is preferred that the semifinished skin element comprises an inner surface intended to be directed to the inside of an associated aircraft structure, such as a wing or a fuselage segment, wherein the inner surface includes the first connection surface. Further, the semifinished support element comprises a flange portion intended to rest against the skin element, wherein the flange portion includes the second connection surface. In such a way, the flange portion with its second connection surface rests against the first connection surface at the inner surface in order to form the connection between the first part and the second part of the finished aircraft structure component.

According to a further preferred embodiment, after the intermediate layer has been applied and before the matrix material is infused, the intermediate layer is pre-cured. Preferably, the intermediate layer is pre-cured by pre-heating the semifinished aircraft structure component to an infusion temperature at which the matrix material is infused. In such a way, the intermediate layer can be fixed to the semifinished first part and/or to the semifinished second part in order not to be washed away by the infusion resin. Alternatively, the intermediate layer is applied after or during pre-heating up to the infusion temperature.

According to yet a further preferred embodiment, the intermediate layer, after being applied, is fixed to the first connection surface and/or to the second connection surface by fixing means, such as stitches or brackets. In such a way the intermediate layer is not washed away by the infusion resin.

According to a preferred embodiment, during resin infusion and curing, the semifinished first part is placed on a tool and the semifinished second part is placed on the semifinished first part. In particular, it is preferred that for curing, the tool together with the semifinished aircraft structure component placed thereon is exposed to a certain temperature in an oven, or to a certain pressure and a certain temperature in an autoclave. For applying a vacuum in order to infuse the matrix material, the semifinished aircraft structure component is preferably covered by a vacuum bag.

Alternatively, a tool can be provided which has at least two separate tool parts enclosing a cavity in which the semifinished aircraft structure component is placed during heating and resin infusion, so that a certain pressure and a certain temperature is applied by the tool itself.

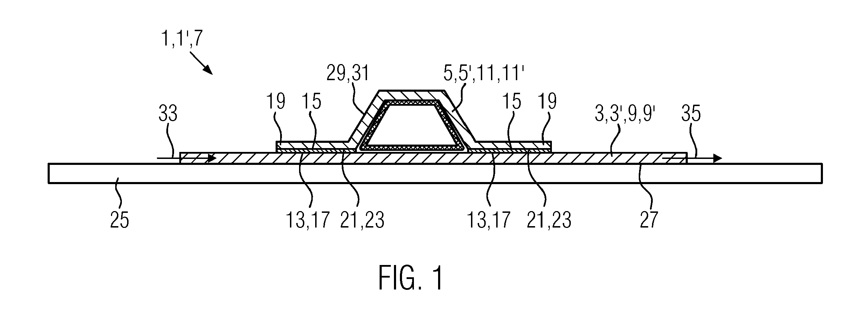

In the following, a preferred embodiment of the present invention is explained in more detail by means of a drawing. The drawing shows in
- Fig. 1: a cross sectional view of an aircraft structure component manufactured by a method according to an embodiment of the present invention.

As shown in Fig. 1, an aircraft structure component 1' of fiber composite material having a first part 3' and a second part 5' connected to the first part 3', can be manufactured by a method according to the invention. In the present embodiment, the aircraft structure component 1' relates to a fuselage shell segment 7, wherein the first part 3' corresponds to a skin element 9' and the second part 5' corresponds to a support element 11', in particular a stringer element, for supporting the skin element 9'. The method comprises the following steps:
First, a semifinished first part 3 and a semifinished second part 5 are provided. Both the semifinished first part 3 and the semifinished second part 5 are made of a dry fiber preform. The semifinished first part 3 has a first connection surface 13 and the semifinished second part 5 has a second connection surface 15 for being connected to the first connection surface 13. The semifinished first part 3 is formed as a semifinished skin element 9 which comprises an inner surface 17 including the first connection surface 13. The semifinished second part 5 is formed as a semifinished support element 11 which comprises a flange portion 19 including the second connection surface 15.

Subsequently, an intermediate layer 21 for assisting adhesion is applied on the first connection surface 13 of the semifinished first part 3 or on the second connection surface 15 of the semifinished second part 5. The intermediate layer 21 in the present embodiment is formed as an adhesive film 23, in particular a FM 300 film of Cytec Industries, which is applied on the first connection surface 13 or on the second connection surface 15 in a solid, integral form, in particular by unwinding it from a roll and placing it on either the first connection surface 13 or the second connection surface 15. In the present embodiment the adhesive film 23 is perforated and comprises a structured surface for allowing and promoting gas exchange of the underlying first or second connection surface 13, 15.

As a next step, a semifinished aircraft structure component 1 is prepared by placing the semifinished first part 3 against the semifinished second part 5, such that the first connection surface 13 rests against the second connection surface 15. In such a way, the adhesive film 23 is sandwiched between the semifinished skin element 9 and the flange portion 19 of the semifinished support element 11, in particular between the first connection surface 13 and the second connection surface 15. The semifinished aircraft structure component 1 is positioned on a corresponding tool 25 for forming and supporting the desired shape of the aircraft structure component 1' to be manufactured, wherein the semifinished first part 3 is placed on the tool 25 and the semifinished second part 5 is placed on the semifinished first part 3. In such a way, the outer surface 27 of the semifinished skin element 9 opposite to the inner surface 17 rests on the tool 25.

Then, the surface 29 of the semifinished aircraft structure component 1, in particular the surface 29 of the semifinished aircraft structure component 1 which is not in contact with the tool 25, is covered by a vacuum bag 31.

Subsequently, the semifinished aircraft structure component 1 together with the tool 25 on which it is placed is positioned in an autoclave (not shown) or an oven (not shown). In the autoclave or oven the semifinished aircraft structure component 1 is pre-heated up to an infusion temperature, so that the adhesive film 23 is pre-cured between the first and second connection surfaces 13, 15 in order not to be washed away by infused matrix material 33.

At the infusion temperature matrix material 33 is infused through the semifinished aircraft structure component 1, i.e. through and between the semifinished first part 3 and the semifinished second part 5, by applying a vacuum 35 to the environment under the vacuum bag 31.

After the matrix material 33 has been entirely infused, the semifinished aircraft structure component 1 is cured by applying a certain pressure and a certain temperature in the autoclave over a certain time, or by applying only a certain temperature in the oven over a certain time.

Finally, after curing is completed, the finished aircraft structure component 1' can be taken out of the autoclave or oven. The intermediate layer 21, i.e. the adhesive film 23, considerably strengthens the connection between the support element 11' and the skin element 9', so that the flange portion 19 of the support element 11' can be minimized for a minimum weight of the aircraft structure component 1'.

## Claims

1. A method for manufacturing an aircraft structure component (1') of fiber composite material having a first part (3') and a second part (5') connected to the first part (3'), the method comprising the steps of:
a) Providing a semifinished first part (3) made of a dry fiber preform and having a first connection surface (13),
b) Providing a semifinished second part (5) made of either a dry fiber preform or a hardened fiber matrix composite, wherein the semifinished second part (5) has a second connection surface (15) for being connected to the first connection surface (13) of the semifinished first part (3),
c) Preparing a semifinished aircraft structure component (1) by placing the semifinished first part (3) against the semifinished second part (5), such that the first connection surface (13) rests against the second connection surface (15),
d) Infusing matrix material (33) through the semifinished aircraft structure component (1),
e) Curing the semifinished aircraft structure component (1),
**Characterized in that**
before infusing matrix material (33) through the semifinished aircraft structure component (1), an intermediate layer (21) for assisting adhesion is applied between the first connection surface (13) of the semifinished first part (3) and the second connection surface (15) of the semifinished second part (5).

2. The method according to claim 1, wherein the intermediate layer (21) is formed as an adhesive film (23).

3. The method according to claim 2, wherein the adhesive film (23) is applied between the first connection surface (13) and the second connection surface (15) by placing the adhesive film (23) solidly and/or integrally onto the first connection surface (13) and/or the second connection surface (15).

4. The method according to claim 2, wherein the adhesive film (23) is applied between the first connection surface (13) and the second connection surface (15) by spraying an aerosol onto the first connection surface (13) and/or the second connection surface (15).

5. The method according to claim 2, wherein the adhesive film (23) is applied between the first connection surface (13) and the second connection surface (15) by distributing a liquid or viscous resin onto the first connection surface (13) and/or the second connection surface (15).

6. The method according to any of claims 2 to 5, wherein the adhesive film (23) is perforated and/or comprises a structured surface.

7. The method according to claim 1, wherein the intermediate layer (21) is formed as a fleece of dry or preimpregnated fibers.

8. The method according to claim 1, wherein the intermediate layer (21) is formed as a fabric of dry or preimpregnated fibers.

9. The method according to any of claims 1 to 8, wherein one of the semifinished first part (3) and the semifinished second part (5) is formed as a semifinished skin element (9), and wherein the other one of the semifinished first part (3) and the semifinished second part (5) is formed as a semifinished support element (11).

10. The method according to claim 9, wherein the semifinished first part (3) is formed as the semifinished skin element (9) and the semifinished second part (5) is formed as the semifinished support element (11).

11. The method according to claim 10, wherein the semifinished skin element (9) comprises an inner surface (17) including the first connection surface (13), and wherein the semifinished support element (11) comprises a flange portion (19) including the second connection surface (15).

12. The method according to any of claims 1 to 11, wherein after the intermediate layer (21) has been applied and before the matrix material (33) is infused, the intermediate layer (21) is pre-cured.

13. The method according to any of claims 1 to 12, wherein the intermediate layer (21), after being applied, is fixed to the first connection surface (13) and/or to the second connection surface (15) by fixing means.

14. The method according to any of claims 1 to 13, wherein the semifinished first part (3) is placed on a tool (25) and the semifinished second part (5) is placed on the semifinished first part (3).

15. The method according to claim 14, wherein for curing, the tool (25) together with the semifinished aircraft structure component (1) placed thereon, is exposed to a certain temperature in an oven, or to a certain pressure and a certain temperature in an autoclave.
